**Europäisches Patentamt**

**European Patent Office**

**Office européen des brevets**

(11) Publication number: **0 127 357**
**A2**

## EUROPEAN PATENT APPLICATION

(21) Application number: **84303184.0**

(22) Date of filing: **11.05.84**

(51) Int. Cl.³: **C 22 B 11/04**
**C 01 B 19/00, C 22 B 3/00**

(30) Priority: **21.05.83 GB 8314123**

(43) Date of publication of application:
**05.12.84 Bulletin 84/49**

(84) Designated Contracting States:
**BE DE GB SE**

(71) Applicant: **Interox Chemicals Limited**
**Hanover House 14 Hanover Square**
**London W1R 0BE(GB)**

(72) Inventor: **Broome, Andrew David John**
**5, Smithills Close Birchwood Park**
**Warrington Cheshire, WA3 7LT(GB)**

(74) Representative: **Pearce, Timothy et al,**
**Laporte Industries Ltd., Group Patent Department, P.O.**
**Box 2, Moorfield Road**
**Widnes, Cheshire WA8 0JU(GB)**

(54) **Oxidation process.**

(57) Anodic slimes obtained from electrowinning copper often contain selenium, tellurium and gold and/or platinum group metals. Pyrometallurgical techniques require close control to avoid emission of highly toxic selenium, and the known hydrometallurgical technique suffers from the disadvantage of oxidising at least a substantial proportion of the selenium/tellurium to the IV oxidation state from which they have to be reduced before separation can occur.

The present invention provides a convenient hydrometallurgical process for oxidising selenium and tellurium direct to the +IV oxidation state using dilute, mildly acidic aqueous hydrogen peroxide, preferably in an amount of from 150% to 300% of the stoichiometric amount, and at a concentration of 5 to 15% w/w obtained by diluting stabilised concentrated hydrogen peroxide. The selenium and tellurium can subsequently be separated using appropriate pH control and sulphur dioxide reduction.

OXIDATION PROCESS

The present invention relates to an oxidation process and more particularly to a process for oxidising selenium and/or tellurium which can be employed for separating selenium and/or tellurium from gold and/or other precious metals.

During the electrolytic processing of copper, impurities often collect as a slime at the anode, of which selenium, tellurium and gold can each comprise a significant proportion usually together with a substantial amount of copper. Platinum group metals can also be present. Such slimes currently represent a major source of selenium in the world, but the current processing methods for its recovery have disadvantages, e.g. they are either high energy consumers and/or require many processing steps. Thus, it is possible to employ pyrometallurgical techniques to recover the selenium from such slimes but in addition to high energy usage, there is a substantial risk of loss of the highly toxic element by discharge into the atmosphere, and unless close control of the process occurs sintering can occur.

A more detailed discussion of the difficulties and problems associated with the various types of roasting procedures is given in a paper by James E. Hoffman entitled Recovery of Selenium from Electrolytic Copper Refinery Slimes. The same article also discloses and comments upon certain hydrometallurgical techniques, following a general observation that lixiviants are either not sufficiently aggressive to completely attack and dissolve all the selenium compounds or they are so aggressive that they attack all constituents of the slimes non-selectively. Two hydrometallurgical processes are discussed. The first process is a pressure leach technique employing hot aqueous sodium hydroxide solution and oxygen under pressure which results in the selenium and tellurium being oxidised to the highest oxidation state, i.e. tellurate and selenate, which requires a subsequent and additional strong reduction stage before selenium can be recovered. Such a process requires expensive specialised equipment. It also suffers from the fact that tellurium has subsequently to be separated from gold or other noble metals, and from both high oxygen consumption and potentially high sodium hydroxide consumption. The second process employs chlorination procedures. The dry variants have significant problems of temperature control to volatalise selenium whilst not fusing impurity chlorides thereby destroying bed porosity. On the other hand a wet chlorination needs critical control to avoid formation of monovalent selenium chloride that would terminally react with precipitated selenium leaving a gummy mass instead of a selenium cake containing precious metals. Even when the process completely controlled, the selenium is subsequently recovered from the cake by an alkaline pressure leach. Additionally, of course, chlorinous effluents are corrosive and environmentally damaging.

One further class of processes, to which Hoffman did not make reference, employs hydrogen peroxide or a related peroxidant at some stage in the treatment of anodic copper slimes. Thus, in Japanese Patent Specification 53-116220, Furukawa Electric Co advocate contacting the slime with an aqueous acidic hydrogen peroxide solution, whereby the copper and selenium are dissolved. This means that calculated on the amount of selenium present in the slime, a very high amount of hydrogen peroxide must be employed. Moreover, subsequently a copper/selenium separation process must be effected. Furukawa advocate the use of thiourea to extract the copper, but even with recycling the thiourea adds significantly to the process costs.

In another proposal, in Japanese Patent Specification 56-84428, Nippon Kinzoku KK dissolve copper and tellurium slimes in a mineral acid containing hydrogen peroxide. Once again the process consumes a substantial excess of hydrogen peroxide if calculated solely on the tellurium content by virtue of the presence of copper. Copper is subsequently recovered by addition of alkali to obtain a pH of 10-12.5 and tellurium by a return neutralisation to pH 3.0 to 6.8. Accordingly, the process is also wasteful in reagents by oscillating between very acid solutions to very alkaline and thence to mildly acid. Furthermore under the strong alkaline conditions of the intermediate separation step there is a substantial risk that selenium if present would be oxidised to selenate (oxidation state VI) thereby rendering its separation from tellurium markedly more difficult.

In a yet further patent and article, S. Koperski et al in Polish Patent 109061, and Rudy Met. Niezelas 1978-23(10), 516-18 describe a two stage process for leaching selenium from furnace dusts, or anode muds from copper refining. In the first stage, an oxidant, preferably hydrogen peroxide is added in a plurality of batches to a slurry of the dust/mud and water and in the second stage the residue is reslurried with sodium or potassium chlorate solution. The leached dust was said to be suitable for further processing to recover silver and copper. The Example was repeated employing the same mole ratio of hydrogen peroxide to selenium plus tellurium in the first stage and same mole-ratio of potassium chlorate to selenium plus tellurium in the second stage, but otherwise employing the same temperature and reagent concentrations. The slimes used in the repeat experiment were essentially copper free but the recovery of selenium and tellurium was very low.

Accordingly, the prior processes do not provide a clear teaching on how to separate the various metals present in anode slime with an economy of stages of oxidation and reduction for the metals.

According to the broadest aspect of the present invention there is provided a process for the controlled oxidation of selenium and tellurium from the zero oxidation state to oxidation state IV in which selenium and tellurium-containing anode slimes from which copper has been removed are brought into contact with dilute aqueous mildly acidic solution of at least 2 moles of hydrogen peroxide per mole of selenium and tellurium at a temperature above ambient temperature and below refluxing temperature.

Conveniently, it has been found that by employing such mild and controlled conditions oxidation of the selenium and tellurium can effectively be halted at the IV oxidation state, nonwithstanding various literature references in Schumb, Satterfield and Wentworth, Monograph on $H_2O_2$ indicating that selenites are readily oxidised by hydrogen peroxide to selenates and selenium is likewise converted to selenic acid, $H_2SeO_4$. Similarly, in the same reference work, tellurates and telluric acid has been reported to be obtained from tellurites and tellurous acid. By so carrying out the process (a) oxidation of selenium and tellurium are oxidised to a soluble form whilst leaving any gold and platinum group metals insoluble and (b) controlled oxidation of the selenium and tellurium to such an intermediate oxidation state that the metals can readily be separated without a further and intermediate reduction step being interposed.

According to a further aspect of the present invention there is provided a process for separating selenium from tellurium in which the elements in the zero oxidation state are oxidised in a first stage by hydrogen peroxide as described in respect of the broadest aspect, and in a second stage without any intermediate reduction stage the aqueous solution thereof is contacted with sulphur dioxide, thereby precipitating out elemental selenium, under strong acidic conditions, and/or alternatively the solution pH is adjusted to very mild acid conditions wherefrom tellurous acid precipitates out or from where tellurium can be precipitated out.

It is an important feature of the present invention that the hydrogen peroxide is present as a dilute solution. A practical range is from 1% to 20% w/w, within which range a preferred range is from 5 to 15% w/w.

The theoretical amount of hydrogen peroxide to oxidise each mole of selenium and tellurium from the zero to the IV oxidation state is two moles. It is preferable to employ excess hydrogen peroxide, especially in the presence of the various impurities that inevitably will be present in a selenium-containing mixture obtained from anode slimes. In a simple batch reaction, it is generally desirable to use at least 50% excess hydrogen peroxide, i.e. at least 3 moles per mole of selenium/tellurium and often not more than 200% excess, i.e. up to 6 moles per mole of selenium/tellurium. It is most convenient for at least a stoichiometric amount of hydrogen peroxide to be present when the solid selenium-containing material and the aqueous hydrogen peroxide are brought together and especially all the peroxide to be added in a single aliquot. Naturally, during the dissolution reaction the hydrogen peroxide content of the solution and the selenium/tellurium content of the solid material can be monitored, and in the event that the former become substantially free from hydrogen peroxide whilst some selenium/tellurium remains undissolved, a further amount (calculated as before) of hydrogen peroxide can be added.

Advantageously, it has been found that the diluting of commercially available hydrogen peroxide with, for example, acidic demineralised water, produces mildly acidic conditions which are well suited to carrying out the reaction. Such solutions before the reaction commences show pHs at or around the range of pH 4 to pH 5, as measured by conventional pH electrodes, and peroxide solutions obtained by other methods can be adjusted to that range by addition as appropriate of an acid or (and rather more unlikely) of a base. Somewhat higher acidities can be tolerated, as can be seen from the fact that the aqueous solution by the time that the selenium/tellurium has dissolved typically has a pH of or around pH 2, but such extra acidification is not necessary. In order to minimise, and preferably prevent tellurium precipitation (as the acid), and so as to thereby obtain proper separation of tellurium from gold it is best to maintain the solution during and particularly after hydrogen peroxide addition at a pH of below pH 5.5 and particularly below pH 5.

The oxidation of selenium/tellurium is preferably carried out at a temperature of at least 50°C since by so doing it is possible to reduce the reaction period and to some extent obtain extra benefit that can accrue by reducing the total amount of hydrogen peroxide consumed, and normaally at up to 90°C, thereby avoiding any unwanated oxidation of the selenium/tellurium to the VI oxidation state. In many very desirable embodiments the temperature is selected in the range of 60 to 80°C, especially at around 75°C.

The reaction/dissolution period for the selenium/tellurium is normally at least an hour and in many instances is in the range of 2 to 10 hours, although if the starting material is especially intractible even longer total reaction periods can be tolerated. It is convenient, often, to monitor the leach solution and separate it from any residual solids when the monitoring of the selenium/tellurium solution indicates that a substantial proportion, especially 100%, of those two metals present in the starting material have been dissolved. The solids/liquid can be separated at the prevailing temperature or first caused or permitted to to cool, so as to reduce the likelihood of further oxidation of the selenium/tellurium to a higher oxidation state. In practice, when the starting material contained gold in detectable amounts the reaction period was advantageously selected in the range of from 4 to 10 hours at 60 to 80°C. Alternatively, ranging trials can be carried out beforehand on representative samples and the reaction conducted for the period indicated by those trials.

In a modification, part of the solution obtained by hydrogen peroxide oxidation of the essentially copper-free anode slimes can be passed for selenium and tellurium recovery and the remainder can be retained as an acidic solution into which a further addition of anode slimes and hydrogen peroxide can be made. Conveniently from 5 to 60% of the solution can be passed to selenium/tellurium recovery and the remainder (95 to 40% w/w) retained. By so doing, it will be recognised that the solution remains throughout the oxidation at an acidity that guarantees that tellurium does not precipitate out and typically at no higher than pH 3 to 3.5. This naturally permits more flexibility in the supply if diluent water, avoiding as far as possible initial acidification of the aqueous reagent. Even more advantageously, the technique permits a reduction in the consumption of hydrogen peroxide over a simple batch process, that can amount to about 20%, possibly as a result of the pH of the solution. Accordingly, it is preferable to select an addition of hydrogen peroxide in a mole ratio to selenium tellurium in the range of 115% to 250% of the theoretical stoichiometric amount. In other aspects, such as temperature and method of addition of hydrogen peroxide the modification is substantially the same as the simple batch process.

The process of the present invention is aimed particularly at anode slimes obtained during the electro-winning of copper. Depending naturally upon the composition of the original copper deposit and subsequent treatments, these slimes can have a wide range of compositions. The copper content can range from 3 to 77 parts, gold and sometimes silver when present in total from 1 to 31 parts, selenium often ranges from 1.5 to 21 parts, and tellurium often ranges from 0.1 to 10 parts, all parts being by weight. It is highly desirable as a preliminary treatment to remove and particularly to leach out the copper, suitably using a dilute sulphuric acid leach, and an agitation leach or bed leach, thereby leaving a solid residue very low in copper but containing mainly the three other components. It will also be recognised that the mineral acid leach of stage 1 can include air oxidation so as to oxidise any copper selenide, to leave selenium metal in the solid residue.

The solution obtained from the oxidative hydrogen peroxide leach contains selenium and tellurium in forms in which the two can be readily separated using reductive techniques and/or appropriate pH control that in themselves are not new, but heretofore have not been combined with a controlled hydrogen peroxide oxidation of copper-free solids to yield a properly structured multi-element separation process. Thus, to encourage tellurium precipitation as tellurous acid the solution can be partially neutralised by addition of, for example, an alkali metal hydroxide, oxide, carbonate, bicarbonate or basic carbonate, preferably to a pH from 5.5 to 6.5 especially around pH 6 to 6.2. After precipitation of the tellurium, a selenium-rich solution is obtained. The selenium is more selectively precipitated from solution with sulphuric dioxide when it has been acidified extremely strongly with a mineral acid such as sulphuric acid. Following the oxidation process though, the selenium solution before acidification has a pH at about pH 2 at best, so that it has a high added acid requirement to achieve a desired concentration of at least 30% w/w of acid. Thus, an interposed stage of tellurium removal may be preferable, with the selenium subsequently being precipitated at an intermediate acidity at which some co-precipitation of tellurium would otherwise be expected.

Accordingly, one especially convenient procedure for separating the elements from an electrolytic copper anodic slime comprises the stages of:-

(1) a dilute mineral acid leach so as to extract most or all of the copper;

(2) an oxidative dilute hydrogen peroxide leach of the separated residue so as to extract into solution the selenium and tellurium leaving solid gold and other precious metals as described hereinbefore;

(3) partial neutralisation of the separated leach liquor from stage (2) to a pH of around pH 6 to precipitate tellurium in acid form; and

(4) re-acidification of the separated tellurium-deficient liquor preferably to below pH 1 and introduction of sulphur dioxide to precipitate out elemental selenium, the solid form of which can be varied by controlling the temperature in the range of ambient to boiling point.

Naturally, the solids residue or precipitate in stages 1, 2 and 3 are separated from supernatant liquor before the subsequent stage is carried out.

The gold can also be purified by conventional techniques, such as dissolution by alkaline cyanide solution followed by decomplexing and hence reprecipitation.

The hydrogen peroxide can contain any of the stabilisers known to be effective in acidic conditions. Thus, for example, the stabiliser can comprise a stabilising amount of one or more dibasic aliphatic acids such as oxalic, succinic or adipic acids, various heterocyclic acids, such as quinaldic or dipicolinic acid, pyrophosphates, hydroxyalkyl and amino phosphonic acids, and aromatic alcohols. It will be recognised that various of these stabilisers cooperate synergistically and also that many of them impart mild acidity to the hydrogen peroxide solution.

Having described the invention in general terms specific embodiments will be described by way of example only, and variation from them in accordance with the foregoing disclosure can be made by the skilled man without departing from the spirit of the present invention.

Examples 1-5

In these Examples which demonstrate the principle of the invention, grey selenium powder was oxidatively dissolved with a solution of hydrogen peroxide (10% w/w) obtained by dilution of concentrated hydrogen peroxide, obtainable commercially from Interox Chemicals Limited, with demineralised water, yielding a mildly acidic solution. The selenium powder was introduced in a single aliquot into a precalculated volume of the aqueous hydrogen peroxide with stirring and the temperature of the mixture maintained at the figure shown in Table 1 for the reaction period indicated therein. During the reaction the pH of the solution drifted downwardly reaching about pH 2 after 100% dissolution of the selenium. At the end of the reaction period any residual solids were filtered off, dried and weighed, and the extent of dissolution was confirmed by an atomic absorption spectroscopic analysis of the solution.

The results are summarised in Table 1 hereinafter, in which the term mole ratio refers to the initial mole ratio of hydrogen peroxide to selenium.

## Table 1

| Ex No | Temp °C | Time Hrs | Mole ratio | % Se Dissolution |
|---|---|---|---|---|
| 1 | 20 | 4 | 6.0 | 91 |
| 2 | 35 | 3 | 6.0 | 100 |
| 3 | 60 | 2 | 6.0 | 100 |
| 4 | 60 | 6 | 2.0 | 88 |
| 5 | 75 | 2 | 3.0 | 100 |

The same result was obtained when Ex 5 was repeated at 85 and 90°C.

From Table 1, it can be seen that the rate of oxidation and dissolution of selenium was better above ambient temperature and that especially at higher temperatures, under optimum conditions little more than a stoichiometric amount of hydrogen peroxide was required. Subsequent recovery using $SO_2$ reductant of an almost quantitative yield of selenium indicates that the product is the readily reducible IV oxidation state to the exclusion of the more troublesome VI oxidation state.

In Ex 5a, Ex 5 was first repeated and the resultant selenious acid solution retained. Secondly, the same weight of selenium powder as in the first stage and 10% aqueous hydrogen peroxide at a mole ratio of 2.3:1 of $H_2O_2$:Se were introduced into the selenious acid solution at a temperature of 85°C with stirring. The resultant solution volume became approximately doubled when the reagents were added. Within six hours all the selenium had dissolved.

By comparison between Ex 5 and Ex 5a it can be seen that more efficient utilisation of hydrogen peroxide was possible when part of the selenious acid solution acted as the medium into which fresh reactants were introduced.

Examples 6 and 7

In these Examples, samples of a copper-free anode slime analysing as 91.4% w/w selenium, 4.2% w/w tellurium and 4.7% gold were introduced into a single aliquot into a predetermined volume of approximately 10% w/w hydrogen peroxide obtained as for Examples 1 to 5. The mixture was maintained at 75°C for seven hours and solid and liquid phases separated by filtration. The solid residue was washed with a small volume of demineralised water and the washing combined with the filtrate, and analysed. The results are summarised in Table 2, and the ratio shown is that for $H_2O_2$:(Se+Te) divided by the theoretical mole ratio.

## Table 2

| Example No. | Stoich | % Dissolution | | | Undissolved | | |
|---|---|---|---|---|---|---|---|
| | | Se | Te | Au | Se | Te | Au |
| 6 | 1.45 | 60 | 80 | - | 40 | 20 | 100 |
| 7 | 2.91 | 100 | 100 | - | - | - | 100 |

From Table 2 it can be seen that in the presence of the gold, the selenium was more difficult to solubilise and thus somewhat larger amounts of hydrogen peroxide were needed, but that if they were used, a very clean separation from the gold was possible. The resulting solution was susceptible to subsequent separation and recovery of the selenium and tellurium by appropriate pH adjustments first to pH 6 and thence to pH 1 and introduction of $SO_2$ reductant.

CLAIMS

1.   A process for the oxidative dissolution of selenium and
     tellurium from anode slimes characterised in that the
     anode slimes from which copper has been removed are
     brought into contact with dilute aqueous mildly acidic
     solution of at least 2 moles of hydrogen peroxide per
     mole of selenium and tellurium a temperature above
     ambient temperature and below refluxing temperature,
     thereby effecting a controlled oxidation of selenium
     and tellurium from the zero oxidation state to
     oxidation state IV.

2.   A process according to claim 1 characterised in that
     the aqueous hydrogen peroxide has a pH of not higher
     than pH 5 throughout the oxidation.

3.   A process according to claim 1 or 2 characterised in
     that the concentration of the hydrogen peroxide in
     solution is from 5 to 15% w/w.

4.   A process according to any preceding claim
     characterised in that selenium/tellurium containing
     materials is contacted with a solution containing from
     50 to 200% excess hydrogen peroxide, based on a
     theoretical requirement of 2 moles per mole of selenium
     and tellurium.

5.   A process according to any preceding claim
     characterised in that it is carried out at 60 to 90°C.

6.   A process according to any preceding claim
     characterised in that the selenium/tellurium-containing
     material also contains gold and/or other precious
     metal.

7.  A process according to any preceding claim
    characterised in that the oxidation temperature is
    maintained for a period selected in the range of
    4 to 10 hours.

8.  A process according to any preceding claim
    characterised in that the selenium-containing material
    has been subjected to a pretreatment with an acidic
    leach for the removal of copper.

9.  A process according to any preceding claim
    characterised in that the selenium(IV)-containing
    liquor is separated from any residual solids and its
    acidity is partially neutralised for precipitation
    therefrom of tellurous acid.

10. A process according to any preceding claim
    characterised in that the selenium(IV)-containing
    liquor after separation from any residual solids is
    acidified and sulphur dioxide is introduced for the
    reduction of the selenium to elemental selenium and its
    precipitation.

11. A process according to any preceding claim
    characterised in that it is in the form of a process
    cycle in which from 5 to 60% of the selenium/tellurium
    liquor is passed for subsequent recovery therefrom of
    the metals and the remainder is retained as a body of
    liquor in which subsequently the next amount of each of
    copper-free anode slimes and aqueous hydrogen peroxide
    are introduced.